(19) Europäisches Patentamt / European Patent Office / Office européen des brevets

(11) **EP 3 288 105 B1**

(12) **EUROPEAN PATENT SPECIFICATION**

(45) Date of publication and mention
of the grant of the patent:
**15.07.2020 Bulletin 2020/29**

(21) Application number: **16783049.6**

(22) Date of filing: **11.04.2016**

(51) Int Cl.:
*H01M 4/62* (2006.01)      *C08F 220/06* (2006.01)
*H01M 10/052* (2010.01)      *H01M 10/0566* (2010.01)
*H01M 4/04* (2006.01)

(86) International application number:
**PCT/JP2016/061729**

(87) International publication number:
**WO 2016/171028 (27.10.2016 Gazette 2016/43)**

(54) **BINDER FOR NONAQUEOUS ELECTROLYTE SECONDARY BATTERY ELECTRODES AND USE OF SAME**

BINDEMITTEL FÜR ELEKTRODEN EINER SEKUNDÄRBATTERIE MIT WASSERFREIEM ELEKTROLYT UND VERWENDUNG DAVON

LIANT POUR ÉLECTRODES DE BATTERIE SECONDAIRE À ÉLECTROLYTE NON AQUEUX ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2015 JP 2015087338**

(43) Date of publication of application:
**28.02.2018 Bulletin 2018/09**

(73) Proprietor: **Toagosei Co., Ltd.**
**Minato-ku**
**Tokyo 105-8419 (JP)**

(72) Inventors:
• **MATSUZAKI Hideo**
**Nagoya-shi**
**Aichi 455-0026 (JP)**
• **SAITO Naohiko**
**Nagoya-shi**
**Aichi 455-0026 (JP)**

• **MATSUNAGA Morikatsu**
**Nagoya-shi**
**Aichi 455-0026 (JP)**
• **KUMAGAI Shinya**
**Nagoya-shi**
**Aichi 455-0026 (JP)**

(74) Representative: **J A Kemp LLP**
**14 South Square**
**Gray's Inn**
**London WC1R 5JJ (GB)**

(56) References cited:
EP-A1- 3 370 288      WO-A1-2014/024967
WO-A1-2014/051067      WO-A1-2014/088070
WO-A1-2014/196547      JP-A- 2012 142 311
JP-A- 2012 151 108      JP-A- 2012 234 703
JP-A- 2013 131 368      JP-A- 2014 160 638
JP-A- 2015 230 884      US-A1- 2014 342 226

**Description**

Technical Field

The present teachings relates to a binder for a nonaqueous electrolyte secondary battery electrode usable in a lithium-ion secondary battery or the like, and to a use therefor. Specifically, it relates to a binder for a nonaqueous electrolyte secondary battery electrode, and to an electrode mixture layer composition for a nonaqueous electrolyte secondary battery, a nonaqueous electrolyte secondary battery electrode and a nonaqueous electrolyte secondary battery obtained using this binder.

Background Art

Lithium-ion secondary batteries are well known as examples of nonaqueous electrolyte secondary batteries. Lithium-ion secondary batteries are popular in smart phones, tablets, notebook computers and other mobile devices because they have superior energy density, output density, charge-discharge cycle characteristics and the like in comparison with other secondary batteries such as lead storage batteries, and they have contributed to reducing the size and weight and increasing the performance of such devices. In terms of input-output characteristics, charging times and the like, however, they have not yet reached the level of performance required of secondary batteries for use in electrical vehicles and hybrid vehicles (vehicle-mounted secondary batteries). Therefore, research is being conducted to improve the charge-discharge characteristics at high current densities (high-rate characteristics) with the aim of increasing the output and reducing the charging times of nonaqueous electrolyte secondary batteries. Also, since high durability is also required for vehicle-mounted applications, compatibility with cycle characteristics is required.

Nonaqueous electrolyte secondary batteries are composed of a pair of electrodes disposed with a separator in between and a nonaqueous electrolyte solution. Each electrode is formed of a collector and a mixture layer formed on the surface of the collector, and the mixture layer is formed by, for instance, coating and drying an electrode mixture layer composition (slurry) containing an active material and a binder and the like on the collector.

Meanwhile, in recent years, aqueous electrode mixture layer compositions have also been in increased demand for reasons such as environmental protection and cost reduction. In the context of lithium-ion secondary batteries, aqueous binders using styrene butadiene rubber (SBR) and carboxymethyl cellulose (CMC) are being used in electrode mixture layer compositions for negative electrodes that use carbon materials such as graphite as the active material. However, further improvements are needed to accommodate the advanced high-rate characteristics and cycle characteristics required for vehicle-mounted applications. Meanwhile, solvent-based binders of polyvinylidene fluoride (PVDF) and the like using organic solvents such as N-methyl-2-pyrrolidone (NMP) are preferred for the positive electrodes of lithium-ion secondary batteries, and no aqueous binder has been proposed that fulfills the requirements discussed above.

Active materials such as graphite and hard carbon (HC) and other carbon-based materials including conductive aids such as Ketjen black (KC) and acetylene black (AB) are often used as components of lithium-ion secondary batteries. In general, these carbon-based materials have poor wettability by aqueous media, so to obtain a uniform electrode mixture layer composition with excellent dispersion stability, an aqueous binder having an excellent dispersion stabilizing effect on these carbon-based materials is desired. Moreover, operations such as winding, rewinding, cutting and rolling are performed in the electrode manufacturing process. Therefore, the electrode mixture layer must be flex resistant in order to prevent occurrence of problems, such as cracks in the mixture layer and detachment of the mixture layer from the collector, during these steps.

Under these circumstances, several aqueous binders applicable to lithium-ion secondary battery electrodes have been proposed.

Patent Literature 1 discloses an acrylic acid polymer crosslinked with a polyalkenyl ether as a binder for forming a negative electrode coating of a lithium-ion secondary battery. Patent Literature 2 describes obtaining an excellent capacity retention rate without breakdown of the electrode structure even using an active material containing silicon by using a polymer comprising polyacrylic acid crosslinked with a specific crosslinking agent as a binder. Patent Literature 3 discloses an aqueous secondary battery electrode binder, containing a water-soluble polymer with a specific aqueous solution viscosity comprising a structural unit derived from an ethylenically unsaturated carboxylic acid salt monomer and a structural unit derived from an ethylenically unsaturated carboxylic acid ester monomer.

Citation List

Patent Literature 1 Japanese Patent Application Publication No. 2000-294247
Patent Literature 2 International Publication No. 2014-065407

Patent Literature 3 Japanese Patent Application Publication No. 2015-18776

Summary

Technical Problem

Both Patent Literature 1 and Patent Literature 2 disclose using a crosslinked polyacrylic acid as a binder, but this binder is insufficiently elastic, and improvements in flex resistance and the like are needed. Moreover, according to the detailed description of the teachings in Patent Literature 1, if the blended compositional ratio of the acrylic acid polymer in the binder exceeds 95% by weight, it covers the particle surfaces of the carbon material, reducing conductivity and impeding the movement of lithium ions. The binder described in Patent Literature 3 has improved elasticity, but is still not satisfactory with respect to dispersion stability and binding properties.
Moreover, none of Patent Literature 1 to 3 includes any description relating to high-rate characteristics.
Under these circumstances, it is an object of the present teachings to provide a binder for a nonaqueous electrolyte secondary battery electrode, satisfactory in terms of both high-rate characteristics and other electrode characteristics such as durability (cycle characteristics) and capable of yielding an electrode with excellent flex resistance, as well as a method for manufacturing an acrylic crosslinked polymer for use in this binder. Another object is to provide an electrode mixture layer composition for a nonaqueous electrolyte secondary battery, a nonaqueous electrolyte secondary battery electrode and a nonaqueous electrolyte secondary battery obtained using this binder.

Solution to Technical Problem

To achieve advanced high-rate characteristics, it is generally desirable to minimize an amount of the binder, which acts as a resistance component. Thus, there is demand for a binder that can stably disperse the active material, conductive aid and the like even when used in a small quantity, that provides strong binding force between particles of the active material and between the active material and the collector (and thus strong adhesion between the mixture layer and the collector), and that yields an electrode with superior durability.
Even when on the active material surface, a binder is required not to inhibit penetration and escape of lithium ions. That is, such a binder preferably has little resistance associated with penetration of lithium ions into the active material and escape of lithium ions from the active material (interface resistance) because it has an excellent lithium ion desolvation effect and lithium ion conductivity.
On the other hand, a highly flexible binder is desirable because a mixture layer with elastic properties is necessary for obtaining an electrode with excellent flex resistance.
The inventors discovered as a result of earnest researched aimed at solving these problems that the high-rate characteristics can be improved with a binder comprising an acrylic crosslinked polymer or salt thereof, this binder having as constituent monomers an ethylenically unsaturated carboxylic acid monomer and an ethylenically unsaturated monomer lacking carboxyl groups and having a specific SP value of the homopolymer, in which the acrylic crosslinked polymer contains a high ratio of monomers having acryloyl groups as a percentage of the total constituent monomers, since the binder exhibits excellent binding properties even when used in a small quantity. Moreover, it was discovered that because this binder has excellent binding properties and elasticity, it is effective for improving the durability (cycle characteristics) and flex resistance of the electrode. Furthermore, because a mixture layer composition containing this binder has a viscosity suited to electrode preparation, it is now possible to obtain a nonaqueous electrolyte secondary battery electrode with a uniform mixture layer and good electrode characteristics. The present teachings were perfected based on these findings.
The present teachings are as follows.

[1] A binder for a nonaqueous electrolyte secondary battery electrode, containing an acrylic crosslinked polymer or salt thereof, wherein
in the acrylic crosslinked polymer, a component (a), which is an ethylenically unsaturated carboxylic acid monomer, constitutes 40% to 90% by weight, and a component (b), which is an ethylenically unsaturated monomer lacking carboxyl groups and having an SP value of 9.0 to 12.5 $(cal/cm^3)^{1/2}$ of the homopolymer, constitutes 10% to 60% by weight of the total constituent monomers, and
a ratio of monomers having acryloyl groups of the total constituent monomers is 70% by weight or more.
[2] The binder for a nonaqueous electrolyte secondary battery electrode according to [1] above, wherein the acrylic crosslinked polymer is crosslinked with a crosslinking monomer, and an amount of this crosslinking monomer used is 0.1 to 2.0 mol% of the total amount of non-crosslinking monomers.
[3] The binder for a nonaqueous electrolyte secondary battery electrode according to [1] or [2] above, wherein the crosslinking monomer is a compound having one or more alkenyl groups in the molecule.

[4] The binder for a nonaqueous electrolyte secondary battery electrode according to [3] above, wherein the crosslinking monomer comprise a compound having multiple allyl ether groups in the molecule, and a compound having both (meth)acryloyl and alkenyl groups.

[5] The binder for a nonaqueous electrolyte secondary battery electrode according to any of [1] to [4] above, wherein the component (b) comprises a monomer having ether groups.

[6] The binder for a nonaqueous electrolyte secondary battery electrode according to any of [1] to [5] above, wherein the component (b) comprises a monomer having amide groups.

[7] The binder for a nonaqueous electrolyte secondary battery electrode according to any of [1] to [6] above, wherein a viscosity of an 0.5% by weight aqueous dispersion of the crosslinked polymer at a degree of neutralization of 90 mol% is 1,000 to 40,000 mPa·s.

[8] A method of manufacturing an acrylic crosslinked polymer for use in a binder for a nonaqueous electrolyte secondary battery electrode by precipitation polymerizing, in an aqueous medium, monomer components of which a component (a), which is an ethylenically unsaturated carboxylic acid monomer, constitutes 40% to 90% by weight, and a component (b), which is an ethylenically unsaturated monomer lacking carboxyl groups and having an SP value of 9.0 to 12.5 (cal/cm$^3$)$^{1/2}$ of the homopolymer, constitutes 10% to 60% by weight, and wherein the ratio of monomers having acryloyl groups is 70% by weight or more.

[9] An electrode mixture layer composition for a nonaqueous electrolyte secondary battery, containing a binder according to any one of [1] to [7] above, together with an active material and water.

[10] A nonaqueous electrolyte secondary battery electrode including a mixture layer formed from the electrode mixture layer composition for a nonaqueous electrolyte secondary battery electrode according to [9] above on the surface of a collector.

[11] A nonaqueous electrolyte secondary battery provided with the nonaqueous electrolyte secondary battery electrode according to [10] above, together with a separator and a nonaqueous electrolyte solution.

Advantageous Effects

The binder for a nonaqueous electrolyte secondary battery of the present teachings has excellent elasticity, and exhibits excellent binding properties even when used in a small amount. It is therefore possible to reduce a binder content of the mixture layer composition, and to obtain an electrode with excellent high-rate characteristics, durability (cycle characteristics) and flex resistance. Moreover, because the electrode mixture layer composition for a nonaqueous electrolyte secondary battery of the present teachings has a viscosity suited to electrode preparation, it can yield a nonaqueous electrolyte secondary battery electrode having a uniform mixture layer and good electrode characteristics.

The present teachings will be explained in detail below. In this Description, "(meth)acrylic" means acrylic and/or methacrylic, and "(meth)acrylate" means acrylate and/or methacrylate. A "(meth)acryloyl group" means an acryloyl group and/or a methacryloyl group.

A binder for a nonaqueous electrolyte secondary battery electrode of the present teachings contains an acrylic crosslinked polymer or salt thereof, and can be mixed with an active material and water to obtain an electrode mixture layer composition. This composition may be a slurry that can be coated on the collector, or it may be prepared as a wet powder and pressed onto the collector surface. The nonaqueous electrolyte secondary battery electrode of the present teachings is obtained by forming a mixture layer from this composition on the surface of a copper foil, aluminum foil or other collector.

The binder for a nonaqueous electrolyte secondary battery electrode, the method for manufacturing a crosslinked acrylic polymer for use in the binder, and the electrode mixture layer composition for a nonaqueous electrolyte secondary battery obtained by the binder, and nonaqueous electrolyte secondary battery electrode and nonaqueous electrolyte secondary battery of the present teachings will be each explained in detail below.

(Binder)

The binder of the present teachings contains an acrylic crosslinked polymer and salt thereof. Moreover, the acrylic crosslinked polymer contains as constituent monomers a component (a), which is an ethylenically unsaturated carboxylic acid monomer, and a component (b), which is an ethylenically unsaturated monomer lacking carboxyl groups and having an SP value of 9.0 to 12.5 (cal/cm$^3$)$^{1/2}$ of the homopolymer.

In these constituent monomers, the ratio of monomers having acryloyl groups is at least 70% by weight, or preferably at least 80% by weight, or more preferably at least 90% by weight as a percentage of the total monomers. If the ratio of monomers having acryloyl groups is at least 70% by weight, the polymerization rate is sufficiently fast to produce a polymer with a long primary chain length, resulting in a binder with good binding properties and dispersion stability. The upper limit of the ratio of monomers having acryloyl groups is 100% by weight.

For the ethylenically unsaturated carboxylic acid monomer of the component (a), specific examples of compounds having acryloyl groups include acrylic acid; acrylamidoalkylcarboxylic acids such as acrylamidohexanoic acid and acrylamidododecanoic acid; and ethylenically unsaturated monomers having carboxyl groups, such as monohydroxyethylacrylate succinate, ω-carboxy-caprolactone monoacrylate and β-carboxyethyl acrylate and (partial) alkali neutralization products of these, and one of these alone or a combination of two or more may be used. Of those listed above, acrylic acid is preferred for obtaining a polymer with a long primary chain length and a binder with good binding properties.

Types of salts include alkali metal salts such as lithium, sodium and potassium salts; alkali earth metal salts such as calcium salts and barium salts; other metal salts such as magnesium salts and aluminum salts; and ammonium salts and organic amine salts and the like. Of these, alkali metal salts and magnesium salts are preferable because they are less likely to adversely affect the battery characteristics, and alkali metal salts are more preferable. Lithium salts are especially preferable as alkali metal salts.

A ratio of the ethylenically unsaturated carboxylic acid monomer (component (a)) as a percentage of the total constituent monomers of the acrylic crosslinked polymer is in the range of 40% to 90% by weight, or more preferably 50% to 90% by weight. When the acrylic crosslinked polymer has carboxylic groups, adhesiveness on the collector is improved, and an electrode with low resistance and excellent high-rate characteristics is obtained due to the excellent desolvation effect and conductivity of lithium ion. Water swellability is also imparted, making it possible to increase the dispersion stability of the active material and the like in the mixture layer composition. If the ratio of the ethylenically unsaturated carboxylic acid monomer as a percentage of the total constituent monomers is less than 40% by weight, the dispersion stability and binding properties and the durability of the resulting electrode may be insufficient. If it exceeds 90% by weight, the flex resistance of the electrode and the high-rate characteristics of the resulting battery may be unsatisfactory.

For the ethylenically unsaturated monomer lacking carboxyl groups and having an SP value of 9.0 to 12.5 $(cal/cm^3)^{1/2}$ of the homopolymer of the component (b), specific examples of compounds having acryloyl groups include acrylic acid esters such as methyl acrylate (SP value: 10.6), ethyl acrylate (SP value: 10.2), butyl acrylate (SP value: 9.77), isobutyl acrylate (SP value: 9.57), 2-ethylhexyl acrylate (SP value: 9.22), cyclohexyl acrylate (SP value: 10.8), 2-methoxyethyl acrylate (SP value: 10.2) and ethoxyethoxyethyl acrylate (SP value: 9.82); N-alkylacrylamide compounds such as isopropyl acrylamide (SP value: 12.0), t-butyl acrylamide (SP value: 11.4), N-n-butoxymethyl acrylamide (SP value: 11.5) and N-isobutoxymethyl acrylamide (SP value: 11.3); and N,N-dialkylacrylamide compounds such as dimethyl acrylamide (SP value: 12.3) and diethyl acrylamide (SP value: 11.3), and one of these alone or a combination of two or more may be used. The SP values given for these compounds were calculated based on the methods proposed by Fedors as described below.

Of those listed above, for the sake of increase in lithium ion conductivity and improved high-rate characteristics, compounds having ether bonds such as alkoxy alkyl acrylate represented by ethoxyethoxyethyl acrylate and 2-methoxyethyl acrylate are preferred, and 2-methoxyethyl acrylate is more preferred.

Compounds having amide groups, such as N-alkylacrylamide compounds and N,N-dialkylacrylamide compounds, are preferred for further improving the binding properties.

Moreover, of those listed above, a compound having a glass transition temperature (Tg) of 0°C or less of the homopolymer is preferred for achieving good flex resistance of the resulting electrode.

The ratio of the ethylenically unsaturated monomer lacking carboxyl groups and having an SP value of 9.0 to 12.5 $(cal/cm^3)^{1/2}$ of the homopolymer (component (b)) as a percentage of the total constituent monomers of the acrylic crosslinked polymer is in the range of 10% to 60% by weight, or still more preferably 10% to 50% by weight, or yet more preferably 20% to 40% by weight.

For example, if the acrylic crosslinked polymer is a polyacrylic acid consisting solely of the component (a) above, its affinity for the electrolyte solution is not very great. However, because the component (b) above has an SP value of 9.0 to 12.5 $(cal/cm^3)^{1/2}$ of the homopolymer that is close to the SP value of the electrolyte solution, affinity for the electrolyte solution increases and the acrylic crosslinked polymer is plasticized to a suitable degree when the component (b) is copolymerized. This reduces the resistance (interface resistance) when lithium ions from the electrolyte solution penetrate the active material covered by the acrylic crosslinked polymer, resulting in improved high-rate characteristics. These effects may not be sufficiently obtained if the ratio of the component (b) is less than 10% by weight. If the ratio of the component (b) exceeds 60% by weight, on the other hand, the binding force may be greatly reduced and durability may be insufficient because the acrylic crosslinked polymer becomes excessively plasticized, and also the desolvation effect may be insufficient and the high-rate characteristics may decline because the amount of the component (a) is too low.

Examples of the principal compounds used in the electrolyte solution (with their SP values) include ethylene carbonate (SP value: 14.7, hereunder sometimes called "EC"), propylene carbonate (SP value: 13.3, hereunder sometimes called "PC"), dimethyl carbonate (SP value: 9.9, hereunder sometimes called "DMC"), diethyl carbonate (SP value: 8.8, hereunder sometimes called "DEC") and ethyl methyl carbonate (hereunder sometimes called "EMC"). The SP values of these compounds are as described in the "Polymer Handbook". The SP value of EMC is not described in this "Polymer Handbook", but is thought to be between the SP values of DMC and DEC. A mixed solution such as EC/DEC = 1/3 (v/v) or EC/EMC = 1/3 (v/v) is used as the actual electrolyte solution.

The SP value of the homopolymer above may be calculated by the calculation methods described in Polymer Engineering and Science 14(2), 147 (1974) by R. F. Fedors. Specifically, it is calculated by a method such as that shown by formula (1).

[Math. 1]

$$\delta = \sqrt{\frac{\sum \Delta E_{vap}}{\sum V}} \qquad (1)$$

$\delta$: SP value $((cal/cm^3)^{1/2})$
$\Delta E_{vap}$: Molar evaporation heat of each atomic group (cal/mol)
$V$: Molar area of each atomic group $(cm^3/mol)$

A non-crosslinking monomer other than the component (a) and the component (b) above may also be included as a monomer component, to an extent that this does not detract from the effects of the present teachings. Examples of other non-crosslinking monomers include vinyl monomers having carboxyl groups, such as methacrylic acid, crotonic acid, itaconic acid, maleic acid, maleic anhydride, fumaric acid, itaconic acid monobutyl, maleic acid monobutyl and cyclohexanedicarboxylic acid, and (partial) alkali neutralization products of these; methacrylate compounds corresponding to the component (b) above; and aromatic vinyl compounds such as styrene, α-methylstyrene, vinyl toluene and styrenesulfonic acid. One of these compounds alone or a combination of two or more may be used.

Apart from this non-crosslinking monomer, a crosslinking monomer may also be used as a monomer component. The crosslinking monomer may be a polyfunctional polymerizable monomer having two or more polymerizable unsaturated groups, or a monomer having self-crosslinkable crosslinking functional groups such as hydrolyzable silyl groups.

The polyfunctional polymerizable monomer is a compound having two or more polymerizable functional groups such as (meth)acryloyl or alkenyl groups in the molecule, and examples include polyfunctional (meth)acrylate compounds, polyfunctional alkenyl compounds, and compounds having both (meth)acryloyl and alkenyl groups and the like. One of these compounds alone or a combination of two or more may be used. Of these, compounds having one or more alkenyl groups in the molecule, such as polyfunctional alkenyl compounds and compounds having both (meth)acryloyl and alkenyl groups, are more preferred for obtaining a uniform crosslinked structure. Compounds having both (meth)acryloyl and alkenyl groups are preferred for obtaining good reactivity and minimizing residual unreacted products. Furthermore, using a compound having multiple allyl ether groups in the molecule and a compound having both (meth)acryloyl and alkenyl groups together as crosslinking monomers is especially desirable for obtaining excellent coating properties and binding properties of the mixture layer composition and excellent flex resistance of the resulting electrode.

Examples of polyfunctional (meth)acrylate compounds include di(meth)acrylates of dihydric alcohols, such as ethylene glycol di(meth)acrylate, propylene glycol di(meth)acrylate, 1,6-hexanediol di(meth)acrylate, polyethylene glycol di(meth)acrylate and polypropylene glycol di(meth)acrylate; tri(meth)acrylates of trihydric and higher polyhydric alcohols, such as trimethylolpropane tri(meth)acrylate, trimethylolpropane ethylene oxide modified tri(meth)acrylate, glycerin tri(meth)acrylate, pentaerythritol tri(meth)acrylate and pentaerythritol tetra(meth)acrylate; poly(meth)acrylates such as tetra(meth)acrylate and the like.

Examples of polyfunctional alkenyl compounds include polyfunctional allyl ether compounds such as trimethylolpropane diallyl ether, pentaerythritol diallyl ether, pentaerythritol triallyl ether, tetraallyl oxyethane and polyallyl saccharose; polyfunctional allyl compounds such as diallyl phthalate; and polyfunctional vinyl compounds such as divinyl benzene and the like.

Examples of compounds having both (meth)acryloyl and alkenyl groups include allyl (meth)acrylate, isopropenyl (meth)acrylate, butenyl (meth)acrylate, pentenyl (meth)acrylate and 2-(2-vinyloxyethoxy)ethyl (meth)acrylate and the like.

Examples of other polyfunctional polymerizable monomers include bisamides such as methylene bisacrylamide and hydroxyethylene bisacrylamide.

Specific examples of the monomers having self-crosslinkable functional groups include vinyl monomers containing hydrolysable silyl groups, and N-methylol (meth)acrylamide, N-methoxyalkyl (meth)acrylate and the like. One of these compounds or a mixture of two or more may be used.

The vinyl monomers containing hydrolysable silyl groups are not particularly limited as long as they are vinyl monomers having at least one hydrolysable silyl group. Examples include vinyl silanes such as vinyl trimethoxysilane, vinyl triethoxysilane, vinyl methyl dimethoxysilane and vinyl dimethyl methoxysilane; acrylic acid esters containing silyl groups, such as trimethoxysilylpropyl acrylate, triethoxysilylpropyl acrylate and methyl dimethoxysilylpropyl acrylate; methacrylic acid esters containing silyl groups, such as trimethoxysilylpropyl methacrylate, triethoxysilylpropyl methacrylate, methyl dimethoxysilylpropyl methacrylate and dimethyl methoxysilylpropyl methacrylate; vinyl ethers containing silyl groups, such as trimethoxysilylpropyl vinyl ether; and vinyl esters containing silyl groups, such as vinyl trimethoxysilyl undecanoate and the like.

When the acrylic crosslinked polymer of the present teachings is one that has been crosslinked with a crosslinking monomer, the amount of the crosslinking monomer used is preferably 0.1 to 2.0 mol%, or more preferably 0.3 to 1.5 mol% of the total amount of the monomers (non-crosslinking monomers) other than crosslinking monomers. A binder having superior binding properties can be obtained if the amount of the crosslinking monomer is within this range.

In addition to the aforementioned crosslinking monomer, the acrylic crosslinked polymer of the present teachings may be one that has been crosslinked with a compound having two or more functional groups capable of reacting with carboxyl groups introduced into the polymer.

Compounds such as the following are examples of compounds having two or more functional groups capable of reacting with carboxyl groups.

i) Compounds forming covalent bonds with carboxyl groups, such as epoxy groups, carbodiimide groups and oxazoline groups.
ii) Compounds having $Ca^{2+}$, $Mg^{2+}$ and the like and forming ion bonds with carboxyl groups.
iii) Compounds having $Zn^{2+}$, $Al^{3+}$, $Fe^{3+}$ and the like and forming coordinate bonds with carboxyl groups.

The viscosity of the acrylic crosslinked polymer is preferably in the range of 1,000 to 40,000 mPa·s when the polymer has been adjusted to a degree of neutralization of 90 mol% and made into a 0.5% by weight aqueous dispersion. This viscosity is measured with a B type viscometer (rotor speed 20 rpm) at a liquid temperature of 25°C. The viscosity of the 0.5% by weight aqueous dispersion is more preferably in the range of 2,000 to 40,000 mPa·s, or still more preferably in the range of 5,000 to 40,000 mPa·s. If the viscosity is at least 1,000 mPa·s, the dispersion stability of the active material and the like are sufficient, and it is possible to obtain an electrode with a uniform mixture layer. If the viscosity is not more than 40,000 mPa·s, the kneading operation is easier during preparation of the electrode mixture layer composition, resulting in a uniform mixture layer composition.

If the crosslinked polymer is unneutralized or has a degree of neutralization of less than 90 mol%, viscosity is measured after the polymer has been neutralized in an aqueous medium with an alkali compound to a degree of neutralization of 90 mol%, and made into an 0.5% by weight aqueous dispersion. When the degree of neutralization of the crosslinked polymer exceeds 90 mol%, the viscosity is measured in an 0.5% by weight aqueous dispersion either at that degree of neutralization or after the polymer has been neutralized to a degree of neutralization of 90 mol% by addition of a suitable acid such as sulfuric acid.

In general, a toughness of a crosslinked polymer is greater the greater the length of the polymer chain (primary chain length), which not only allows for stronger binding properties but also increases the viscosity of the aqueous dispersion. In water, a crosslinked polymer (salt) obtained by applying a relatively small amount of crosslinking to a polymer with a long primary chain length exists as a microgel swelled with water. The viscosity of the aqueous dispersion rises as the degree of crosslinking increases, but if there is too much crosslinking the viscosity of the aqueous dispersion tends to decline because the water-swelling ability of the crosslinked polymer is limited. In the electrode mixture layer composition of the present teachings, the effects of increased viscosity and dispersion stabilization are achieved through the interactions of this microgel. The interactions of the microgel differ depending on the degree of water swelling of the microgel and the strength of the microgel, which are in turn controlled by the degree of crosslinking of the crosslinked polymer. If the degree of crosslinking is too low the microgel may be insufficiently strong, and the dispersion stabilization effect and binding properties may be insufficient. If the degree of crosslinking is too high, on the other hand, and the dispersion stabilization effect and binding properties may be insufficient because the microgel does not swell sufficiently. That is, a micro crosslinked polymer obtained by applying a suitable degree of crosslinking to a polymer with a sufficiently long primary chain length is desirable as the crosslinked polymer.

As discussed above, although the degree of crosslinking of the crosslinked polymer of the present teachings is relatively low, it exhibits a viscosity of at least 1,000 mPa·s due to packing of the microgel even in an aqueous dispersion with a low concentration of 0.5% by weight. It thus appears that the primary chain length is sufficiently long and that there is a suitable degree of crosslinking. Because a binder comprising such a crosslinked polymer has excellent binding properties, it is possible to reduce the amount of the binder used, and improve the high-rate characteristics of the electrode.

The crosslinked polymer of the present teachings is preferably used in the form of a salt in which the acid groups such as carboxyl groups derived from the ethylenically unsaturated carboxylic acid monomer are neutralized to a degree of neutralization of 20 to 100 mol%. The degree of neutralization is more preferably 50 to 100 mol%, or still more preferably 60 to 95 mol%. A degree of neutralization of 20 mol% or higher is desirable because it makes it easier to obtain good water-swelling properties and dispersion stabilization effects.

(Method for manufacturing acrylic crosslinked polymer and salt thereof)

A known polymerization method such as solution polymerization, precipitation polymerization, suspension polymerization or inverse emulsion polymerization may be used for manufacturing of the acrylic crosslinked polymer of the present teachings, but precipitation polymerization is preferred for purposes of efficiently manufacturing a polymer with a long primary chain length and a suitable degree of crosslinking.

Precipitation polymerization is a method of manufacturing a polymer by performing a polymerization reaction in a solvent that dissolves the starting material (unsaturated monomer) but effectively does not dissolve the resulting polymer. As polymerization progresses, the polymer particles grow larger by aggregation and polymer growth, resulting in a dispersion of polymer particles of micrometers to tens of micrometers in size formed by aggregation of primary particles of tens of nanometers to hundreds of nanometers in size. A dispersion stabilizer may also be used to control the polymer particle size. Following polymerization, the reaction solution may be subjected to filtration, centrifugation or the like to separate the polymer particles from the solvent.

In precipitation polymerization, a solvent selected from water and various organic solvents and the like may be used as the polymerization solvent depending on the types of monomers used and the like. A solvent with a small chain transfer constant is preferred for obtaining a polymer with a longer primary chain length.

When the ethylenically unsaturated carboxylic acid monomer is polymerized in an unneutralized state, specific examples of polymerization solvents include benzene, ethyl acetate, dichloroethane, n-hexane, cyclohexane, n-heptane and the like, and one of these alone or a combination of two or more may be used.

When polymerizing a (partial) neutralization product of the ethylenically unsaturated carboxylic acid monomer, a water-soluble solvent such as methanol, t-butyl alcohol, acetone or tetrahydrofuran may be used, and one of these alone or a mixture of two or more may be used. Mixed solvents of these with water may also be used. In the present teachings, a water-soluble solvent is one with a solubility of more than 10 g/100 ml in water at 20°C.

In order to obtain a polymer providing excellent dispersion stability of the active material, preferably a (partial) neutralization product of the ethylenically unsaturated carboxylic acid monomer is precipitation polymerized in an aqueous medium comprising water and a water-soluble solvent. In this case, precipitation and aggregation of the polymer can be controlled by adjusting the amount of water and the type and amount of the water-soluble solvent according to the types and amounts of the monomers used, to thereby ensure the dispersion stability of the precipitated particles and stably complete polymerization. The ratio of the water-soluble solvent contained in the aqueous medium is preferably 50% to 100% by weight, or more preferably 70% to 100% by weight, or still more preferably 90% to 100% by weight of the total amount of the aqueous medium.

A known polymerization initiator such as an azo compound, organic peroxide or inorganic peroxide may be used as a polymerization initiator, without any particular restrictions. The conditions of use may be adjusted to achieve a suitable amount of radical generation, using a known method such as thermal initiation, redox initiation using a reducing agent, UV initiation or the like. To obtain a crosslinked polymer with a long primary chain length, the conditions are preferably set so as to reduce the amount of radical generation within the allowable range of manufacturing time.

Examples of the azo compound include 2,2'-azobis(2,4-dimethylvaleronitrile), 2,2'-azobis(N-butyl-2-methylpropionamide), 2-(tert-butylazo)-2-cyanopropane, 2,2'-azobis(2,4,4-trimethylpentane) and 2,2'-azobis(2-methylpropane), and one of these or a combination of two or more may be used.

Examples of the organic peroxide include 2,2-bis(4,4-di-t-butylperoxycyclohexyl) propane (product name "Pertetra A" by NOF Corporation), 1,1-di(t-hexylperoxy) cyclohexane (product name "Perhexa HC" by NOF Corporation), 1,1-di(t-butylperoxy) cyclohexane (product name "Perhexa C" by NOF Corporation), n-butyl-4,4-di(t-butylperoxy) valerate (product name "Perhexa V" by NOF Corporation), 2,2-di(t-butylperoxy)butane (product name "Perhexa 22" by NOF Corporation), t-butylhydroperoxide (product name "Perbutyl H" by NOF Corporation), cumene hydroperoxide (product name "Percumyl H" by NOF Corporation), 1,1,3,3-tetramethylbutyl hydroperoxide (product name "Perocta H" by NOF Corporation), t-butylcumyl peroxide (product name "Perbutyl C" by NOF Corporation), di-t-butyl peroxide (product name "Perbutyl D" by NOF Corporation), di-t-hexyl peroxide (product name "Perhexyl D" by NOF Corporation), di(3,5,5-trimethylhexanoyl) peroxide (product name "Peroyl 355" by NOF Corporation), dilauroyl peroxide (product name "Peroyl L" by NOF Corporation), bis(4-t-butylcyclohexyl) peroxydicarbonate (product name "Peroyl TCP" by NOF Corporation), di-2-ethylhexyl peroxydicarbonate (product name "Peroyl OPP" by NOF Corporation), di-sec-butyl peroxydicarbonate (produt name "Peroyl SBP" by NOF Corporation), cumyl peroxyneodecanoate (product name "Percumyl ND" by NOF Corporation), 1,1,3,3-tetramethylbutyl peroxyneodecanoate (product name "Perocta ND" by NOF Corporation), t-hexyl peroxyneodecanoate (product name "Perhexyl ND" by NOF Corporation), t-butyl peroxyneodecanoate (product name "Perbutyl ND" by NOF Corporation), t-butyl peroxyneoheptanoate (product name "Perbutyl NHP" by NOF Corporation), t-hexyl peroxypivalate (product name "Perhexyl PV" by NOF Corporation), t-butyl peroxypivalate (product name "Perbutyl PV" by NOF Corporation), 2,5-dimethyl-2,5-di(2-ethylhexanoyl) hexane (product name "Perhexa 250" by NOF Corporation), 1,1,3,3-tetramethylbutylperoxy-2-ethylhexanoate (product name "Perocta O" by NOF Corporation), t-hexylperoxy-2-ethylhexanoate (product name "Perhexyl O" by NOF Corporation), t-butylperoxy-2-ethylhexanoate (product name "Perbutyl O" by NOF Corporation), t-butyl peroxylaurate (product name "Perbutyl L" by NOF Corporation), t-butyl peroxy-3,5,5-trimethylhexanoate (product name "Perbutyl 355" by NOF Corporation), t-hexylperoxyisopropyl monocarbonate (product name "Perhexyl I" by NOF Corporation), t-butylperoxyisopropyl monocarbonate (product name "Perbutyl I" by NOF Corporation), t-butyl-oxy-2-ethyl hexyl monocarbonate (product name "Perbutyl E" by NOF Corporation), t-butyl peroxyacetate (product name "Perbutyl A" by NOF Corporation), t-hexyl peroxybenzoate (product name "Perhexyl Z" by NOF Corporation) and t-butyl peroxybenzoate (product name "Perbutyl Z" by NOF Corporation) and the like. One of these or a combination of two or more may be used.

Examples of the inorganic peroxide include potassium persulfate, sodium persulfate and ammonium persulfate.

When using a redox initiator, sodium sulfite, sodium thiosulfate, sodium formaldehyde sulfoxylate, ascorbic acid, sulfite gas ($SO_2$), ferrous sulfate or the like can be used as the reducing agent.

The preferred amount of the polymerization initiator used is 0.001 to 2 parts by weight, or preferably 0.005 to 1 part by weight, or more preferably 0.01 to 0.1 parts by weight given 100 parts by weight as the total amount of the monomer components used. If the amount of the polymerization initiator is 0.001 parts or more, the polymerization reaction can be accomplished stably, while if it is 2 or less parts it is easy to obtain a polymer with a long primary chain length.

A concentration of the monomer components during polymerization is preferably high in order to obtain a polymer with a longer primary chain length. However, because the polymerization heat becomes hard to control and a runaway polymerization reaction may occur if the concentration of the monomer components is too high, polymerization is normally performed using a monomer concentration of about 2% to 30% by weight at the start of polymerization. The monomer concentration at the start of polymerization is preferably 5% to 30% by weight, or more preferably 15% to 30% by weight, or still more preferably 20% to 30% by weight.

The polymerization temperature depends on the conditions such as the types and concentrations of the monomers used, but is preferably 0°C to 100°C, or more preferably 20°C to 80°C. The polymerization temperature may be constant, or may be changed during the period of the polymerization reaction. The polymerization time is preferably 1 minute to 10 hours, or more preferably 10 minutes to 5 hours, or still more preferably 30 minutes to 2 hours.

(Electrode mixture layer composition for a nonaqueous electrolyte secondary battery)

The electrode mixture layer composition for a nonaqueous electrolyte secondary battery of the present teachings contains a binder containing the acrylic crosslinked polymer and salt thereof, together with an active material and water.

Of the active materials described above, lithium salts of transition metal oxides are principally used as positive electrode active materials, and for example layered rock salt-type and spinel-type lithium-containing metal oxides may be used. Specific compounds that are laminar rock salt-type positive electrode active materials include lithium cobaltate, lithium nickelate, and NCM {$Li(Ni_x,Co_y,Mn_z)$, $x + y + z = 1$} and NCA {$Li(Ni_{1-a-b}Co_aAl_b)$} and the like, which are referred to as ternary materials. Examples of spinel-type positive electrode active materials include lithium manganate and the like. Apart from oxides, phosphate salts, silicate salts and sulfur and the like may also be used. Examples of phosphate salts include olivine-type lithium iron phosphate and the like. One of these may be used alone as a positive electrode active material, or two or more may be combined and used as a mixture or composite.

When the layered rock salt-type positive electrode active material is dispersed in water, the dispersion exhibits alkalinity because the lithium ions on the surface of the active material are exchanged for hydrogen ions in the water. There is thus a risk of corrosion of aluminum foil (Al) or the like, which is a general positive electrode collector material. In such cases, it is desirable to neutralize the alkali component eluted from the active material by using an unneutralized or partially neutralized crosslinked polymer as the binder. The amount of the unneutralized or partially neutralized crosslinked polymer used is preferably such that the amount of unneutralized carboxyl groups in the crosslinked polymer is equivalent to or more than the amount of alkali eluted from the active material.

Because all the positive electrode active materials have low electrical conductivity, a conductive aid is normally added and used. Examples of conductive aids include carbon materials such as carbon black, carbon nanotubes, carbon fiber, graphite fine powder, and carbon fiber. Of these, carbon black, carbon nanotubes and carbon fiber are preferred to make it easier to obtain excellent conductivity. As the carbon black, ketjen black and acetylene black are preferable. One of these conductive aids may be used alone, or a combination of two or more may be used. The amount of the conductive aid used is preferably 2% to 20% by weight, or more preferably 2% to 10% by weight of the total amount of the active material in order to achieve both conductivity and energy density.

The positive electrode active material may also be a conductive carbon material that has been surface coated.

Examples of negative electrode active materials include carbon materials, lithium metal, lithium alloys, metal oxides and the like, and one of these or a combination of two or more may be used. Of these, an active material constituted of a carbon material such as natural graphite, artificial graphite, hard carbon, and soft carbon (hereunder referred to as a "carbon-based active material") is preferred, and hard carbon or a graphite such as natural graphite or artificial graphite is more preferred. In a case of graphite, spheroidized graphite is desirable from a standpoint of battery performance, and particle size thereof is preferably in a range of 1 to 20 $\mu$m, or more preferably 5 to 15 $\mu$m.

To increase the energy density, metals, metal oxides or the like capable of occluding lithium, such as silicon and tin, are also preferably used as negative electrode active materials. Of these, silicon has a higher capacity than graphite, and an active material formed of a silicon material such as silicon, a silicon alloy or a silicon oxide such as silicon monoxide (SiO) (hereunder referred to as a "silicon-based active material") may be used. Although these silicon-based active materials have high capacities, however, a volume change accompanying charging and discharging is large. Therefore, they are preferably used in combination with the aforementioned carbon-based active materials. In this case, a large compounded amount of the silicon active material can cause breakdown of the electrode material, greatly detracting from the cycle characteristics (durability). From this perspective, when a silicon-based active material is included the amount thereof is preferably 60% by mass or less, or more preferably 30% by mass or less of the amount of the carbon-based active material.

Because carbon-based active materials themselves have good electrical conductivity, it may not be necessary to add a conductive aid. When a conductive aid is added to further reduce resistance or the like, the amount thereof is preferably 10% by weight or less, or more preferably 5% by weight or less of the total amount of the active material from the standpoint of energy density.

When the electrode mixture layer composition for a nonaqueous electrolyte secondary battery is in slurry form, the amount of the active material used is in a range of preferably 10% to 75% by weight, or more preferably 30% to 65% by weight of the total amount of the composition. The amount of the active material of 10% by weight or more is advantageous for suppressing migration of the binder and the like, and advantageous also because of drying costs of the medium. If the amount is 75% by weight or less, on the other hand, it is possible to ensure flowability and coating performance of the composition, and to form a uniform mixture layer.

When the electrode mixture layer composition is prepared in a wet powder state, the amount of the active material used is in a range of preferably 60% to 97% by weight, or more preferably 70% to 90% by weight of the total amount of the composition.

From the standpoint of energy density, the non-volatile components other than the active material, such as the binder and conductive aid, are preferably used in the smallest amounts possible within a rage where binding property and conductivity.

(Water)

The electrode mixture layer composition for a nonaqueous electrolyte secondary battery of the present teachings uses water as a medium. To adjust the properties such as drying properties of the composition, it is also possible to use a mixed solvent of water with a water-soluble organic solvent, which may be a lower alcohol such as methanol or ethanol, a carbonate such as ethylene carbonate, a ketone such as acetone, or tetrahydrofuran, N-methylpyrrolidone or the like. A percentage of water in the mixed solvent is preferably 50% by weight or more, or more preferably 70% by weight or more.

When the electrode mixture layer composition is in a coatable slurry form, the content of the media including water as a percentage of the total composition is in a range of preferably 25% to 90% by weight, or more preferably 35% to 70% by weight from the standpoint of the slurry coating properties, the energy costs required for drying, and productivity. If the electrode mixture layer composition is in a wet powder form that can be pressed, the content of the media is preferably 3% to 40% by weight or more preferably 10% to 30% by weight from the standpoint of obtaining uniformity in the mixture layer after pressing.

The amount of the crosslinked polymer and salt thereof used in the electrode mixture layer composition of the present teachings is 0.5% to 5.0% by weight, or preferably 1.0% to 5.0% by weight, or more preferably 1.5% to 5.0% by weight, or still more preferably 2.0% to 5.0% by weight of the total amount of the active material. If the amount of the crosslinked polymer and salt thereof is less than 0.5% by weight, sufficient binding properties may not be obtained. The dispersion stability of the active material and the like may also be insufficient, and the uniformity of the formed mixture layer may be lowered. If the amount of the crosslinked polymer and salt thereof exceeds 5.0% by weight, on the other hand, the coating properties on the collector may decline because the electrode mixture layer composition becomes highly viscous. Coating lumps and irregularities may occur in the mixture layer as a result, adversely affecting the electrode characteristics. Interface resistance may also increase, detracting from the high-rate characteristics.

If the crosslinked polymer and salt thereof are used in the amount described above, the resulting composition has excellent dispersion stability, and it is possible to obtain a mixture layer with extremely strong adhesiveness on the collector, thereby improving the durability of the battery. Moreover, because the amount of 0.5% to 5.0% by weight of the active material is small and because the polymer has carboxyl anions, interface resistance is low, resulting in an electrode with excellent high-rate characteristics.

The binder of the present teachings may be formed solely of the acrylic crosslinked polymer or salt thereof, but this may also be combined with another binder component such as styrene/butadiene latex (SBR), acrylic latex, and polyvinylidene fluoride latex. When another binder component is included, the amount thereof is preferably not more than 5% by weight, or more preferably not more than 2% by weight, or still more preferably not more than 1% by weight of the active material. If the amount of the other binder component exceeds 5% by weight, resistance increases, and the high-rate characteristics may become insufficient.

(Method for manufacturing electrode mixture layer composition for nonaqueous electrolyte secondary battery)

The electrode mixture layer composition for a nonaqueous electrolyte secondary battery of the present teachings has the active material, water and a binder as essential components, and is obtained by mixing each component by known methods. The methods of mixing the individual components are not particularly limited, and known methods may be used, but in a preferred method the powder components including the active material, conductive aid and binder (crosslinked polymer particle) are dry blended, and then mixed with a dispersion medium such as water and dispersed and kneaded.

When the electrode mixture layer composition is obtained in slurry form, it is preferably refined into a slurry without dispersion defects or agglomeration. The mixing method may be one using a known mixer such as a planetary mixer, thin film swirling mixer or self-revolving mixer, and a thin film swirling mixer is preferred for obtaining a good dispersed state in a short time. When a thin film swirling mixer is used, pre-dispersion is preferably performed in advance with a disperser or other stirring devices.

The viscosity of the slurry is in a range of preferably 500 to 100,000 mPa·s, or more preferably 1,000 to 50,000 mPa·s (B type viscosity at 60 rpm).

When the electrode mixture layer composition is obtained as a wet powder, it is preferably kneaded with a planetary mixer, twin-screw kneader or the like to obtain a uniform state without concentration irregularities.

(Non-aqueous electrolyte secondary battery electrode)

The non-aqueous electrolyte secondary battery electrode of the present teachings is provided with a mixture layer constituted of the electrode mixture layer composition on the surface of a collector such as a copper or aluminum collector. The mixture layer is formed by first coating the electrode mixture layer composition of the present teachings on the surface of the collector, and then drying to remove the water or other medium. The method of coating the mixture layer composition is not particularly limited, and a known method such as a doctor blade method, dipping, roll coating, comma coating, curtain coating, gravure coating or extrusion may be adopted. The drying may also be accomplished by a known method such as warm air blowing, pressure reduction, (far) infrared exposure or microwave iiradiation.

The mixture layer obtained after drying is normally subjected to compression treatment with a metal press, roll press or the like. By compressing, the active material and the binder are brought into close contact with each other, and the strength of the mixture layer and the adhesion to the collector can be improved. Preferably compression reduces a thickness of the mixture layer to about 30% to 80% of a pre-compression thickness, and the thickness of the mixture layer after compression is normally about 4 to 200 $\mu$m.

(Nonaqueous electrolyte secondary battery)

The nonaqueous electrolyte secondary battery of the present teachings is explained here. The nonaqueous electrolyte secondary battery of the present teachings is provided with the nonaqueous electrolyte secondary battery electrode together with a separator and a nonaqueous electrolyte solution of the present teachings.

The separator is disposed between the positive and negative electrodes of the battery, and serves to prevent short-circuits caused by contact between the electrodes and ensure ion conductivity by retaining the electrolyte solution. Preferably the separator is a microporous film with insulating properties, and has good ion permeability and mechanical strength. Specific materials that can be used include polyolefins, such as polyethylene and polypropylene, and polytetrafluoroethylene and the like.

For the nonaqueous electrolyte solution, a known electrolyte solution commonly used in nonaqueous electrolyte secondary batteries can be used. Specific examples of the solvent include cyclic carbonates with high dielectric constants and good ability to dissolve electrolytes, such as propylene carbonate and ethylene carbonate, and linear carbonates with low viscosity, such as ethyl methyl carbonate, dimethyl carbonate and diethyl carbonate, and these may be used alone or as a mixed solvent. A lithium salt such as $LiPF_6$, $LiSbF_6$, $LiBF_4$, $LiClO_4$ or $LiAlO_4$ is dissolved in this solvent and used as the nonaqueous electrolyte solution.

The nonaqueous electrolyte secondary battery of the present teachings can be obtained by winding or laminating the positive plate and negative plate with the separator between the two, and accomodating this in a case or the like.

[Examples]

The present teachings will be described in detail below based on examples. However, the present teachings are not limited by these examples. In the following, "parts" and "%" mean parts by weight and % by weight unless otherwise specified.

(Manufacturing Example 1: Manufacture of acrylic crosslinked polymer R-1)

A reaction vessel equipped with a stirring blade, a thermometer, a reflux condenser and a nitrogen introduction pipe was used for polymerization.

342 parts of methanol, 80 parts of acrylic acid (hereunder called "AA"), 20 parts of 2-methoxyethyl acrylate (hereunder called "2-MEA"), 0.5 parts of allyl methacrylate (Mitsubishi Gas Chemical Company, Inc, hereunder called "AMA") and 1.0 part of pentaerythritol triallyl ether (product name "Neoallyl P-30" by Daiso Chemical Co., Ltd.) were loaded into the reaction vessel. 22.22 parts of caustic soda flakes and 16 parts of ion-exchange water were then added gradually under stirring in such a way that internal temperature is maintained at 40°C or lower.

The reaction vessel was thoroughly purged with nitrogen, and heated to raise the internal temperature to 68°C. Once the internal temperature was confirmed to have stabilized at 68°C, 0.01 parts of 4,4'-azobiscyanovaleric acid (product name "ACVA" by Otsuka Chemical Co., Ltd.) were added as a polymerization initiator, and since white turbidity of the reaction solution was observed at this point, this was taken as the polymerization starting point. The polymerization reaction was continued with the external temperature (water bath temperature) adjusted so that the solvent was gently refluxed, 0.01 parts of ACVA were added once 3 hours had elapsed since the polymerization starting point, 0.03 parts of ACVA were further added once 6 hours had elapsed since the polymerization starting point, and solvent reflux was then maintained. Cooling of the reaction solution was initiated 9 hours after the polymerization starting point, and once the internal temperature had fallen to 30°C, 17.78 parts of caustic soda flakes were gradually added in such a way that the internal temperature did not exceed 50°C. Once addition of the caustic soda flakes was complete and the internal temperature had fallen to 30°C or less, the polymerization reaction solution (polymer slurry) was filtered by suction filtration. The filtered polymer was washed with methanol in twice the amount of the polymerization reaction solution, and a filtrate cake was collected and vacuum dried for 6 hours at 100°C to obtain an acrylic crosslinked polymer R-1 in powder form. The acrylic crosslinked polymer R-1 had a degree of neutralization of 90 mol%. Because the acrylic crosslinked polymer R-1 was hygroscopic, it was stored and sealed in a container having water vapor barrier properties.

The acrylic crosslinked polymer R-1 obtained above was mixed with water to a concentration of 0.5% by weight, and stirred until a transparent, uniformly dispersed (swelled) state was reached. The resulting dispersion was adjusted to 25 ± 1°C, and the viscosity was measured with a TVB-10 B type viscometer (Toki Sangyo Co., Ltd.) at a rotor speed of 20 rpm. The results are shown in Table 1.

(Manufacturing Examples 2 to 16: Manufacture of crosslinked polymers R-2 to R-16)

The acrylic crosslinked polymers R-2 to R-16 were obtained in powder form by the same operations as in Manufacturing Example 1 except that the loaded amounts of the starting materials were as shown in Table 1.

[Table 1]

| Manufacturing Example No. | | | ME 1 | ME 2 | ME 3 | MB 4 | ME 5 | ME 6 | ME 7 | ME 8 | ME 9 | ME 10 | ME 11 | ME 12 | ME 13 | ME 14 | ME 15 | MF 16 |
|---|---|---|---|---|---|---|---|---|---|---|---|---|---|---|---|---|---|---|
| Acrylic crosslinked polymer | | | R-1 | R-2 | R-3 | R-4 | R-5 | R-6 | R-7 | R-8 | R-9 | R-10 | R-11 | R-12 | R-13 | R-14 | R-15 | R-16 |
| (Parts) loaded | Monomer | AA | 80 | 60 | 40 | 60 | 60 | 60 | 60 | 60 | 60 | 60 | 60 | 60 | 20 | 25 | 100 | 60 |
| | | MAA | | | | | | | | | | | | | 40 | | | |
| | | 2-MEA | 20 | 40 | 60 | 40 | 40 | 40 | 40 | | | | 40 | 40 | 40 | 40 | | |
| | | BA | | | | | | | | 40 | | | | | | | | |
| | | NIPAM | | | | | | | | | 40 | | | | | 35 | | |
| | | TBAM | | | | | | | | | | 40 | | | | | | |
| | | AAm | | | | | | | | | | | | | | | | 40 |
| | Crosslinking agent | AMA | 0.5 | 0.5 | 0.5 | 0.5 | 1.0 | 2.0 | | 0.5 | 0.5 | 0.5 | | | 0.5 | 0.5 | 0.5 | 0.5 |
| | | P-30 | 1.0 | 1.0 | 1.0 | | | | 2.0 | 1.0 | 1.0 | 1.0 | | | 1.0 | 1.0 | 1.0 | 1.0 |
| | | 1,6-HDDA | | | | | | | | | | | 1.0 | | | | | |
| | Initial NaOH flakes | | 22,22 | 16.67 | 11.11 | 16.67 | 16.67 | 16.67 | 16.67 | 16.67 | 16,67 | 16.67 | 16.67 | 16.67 | 14.86 | 6.94 | 19.44 | 16.67 |
| | Ion-exchange water | | 16.0 | 19.0 | 23.0 | 19.0 | 19.0 | 19.0 | 19.0 | 23.0 | 16.0 | 17.0 | 19.0 | 19.0 | 23.0 | 23.0 | 15.0 | 17.0 |
| | Methanol | | 342.0 | 339.0 | 335.0 | 339.0 | 339.0 | 339.0 | 339.0 | 335.0 | 342.0 | 341.0 | 339.0 | 339.0 | 335.0 | 335.0 | 343.0 | 341.0 |
| | Polymerization initiator ACVA | Initial | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | | Additional | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 |
| | Additional NaOH flakes | | 17.78 | 13.33 | 8.89 | 13.33 | 13.33 | 13.33 | 13.33 | 13.33 | 13.33 | 13.33 | 13.33 | 13.33 | 11.89 | 5.56 | 30.56 | 13.33 |
| Initial monomer concentration (% by weight) | | | 20.8% | 21.0% | 21.2% | 21.0% | 21.0% | 21.0% | 21.0% | 21.0% | 21.0% | 21.0% | 21.0% | 21.1% | 21.1% | 21.4% | 20.9% | 21.0% |
| Crosslinking agent (mol%) of monomers | | | 0.622 % | 0.690 % | 0.774 % | 0.348 % | 0.696 % | 1.391 % | 0.684 % | 0.687 % | 0.663 % | 0.686 % | 0.387 % | 0.000 % | 0.749 % | 0.816 % | 0.567 % | 0.563 % |
| Degree of Neutralization (%) | | | 90.0% | 90.0% | 90.0% | 90.0% | 90.0% | 90.0% | 90.0% | 90.0% | 90.0% | 90.0% | 90.0% | 90.0% | 90.0% | 90.0% | 90.0% | 90.0% |
| Viscosity (mP·s) of 0.5% by weight aqueous dispersion at 90 mol% neutralization | | | 21,000 | 10,500 | 3,400 | 2,600 | 14,300 | 1,800 | 3,200 | 7,800 | 16,000 | 15,500 | 1,100 | 80 | 320 | 220 | 4,500 | 4,700 |

The details of the compounds used in Table 1 are as follows.

AA: Acrylic acid
MAA: Methacrylic acid
2-MEA: 2-methoxyethyl acrylate
BA: Butyl acrylate
NIPAM: Isopropylacrylamide
TBAM: t-butyl acrylamide
AAm: Acrylamide
AMA: Allyl methacrylate
P-30: Pentaerythritol triallyl ether (product name "Neoallyl P-30" by Daiso Chemical Co., Ltd.)
1,6-HDDA: 1,6-hexanediol diacrylate
ACVA: 4,4'-azobiscyanovaleric acid (Otsuka Chemical Co., Ltd.)

Preparation and evaluation of nonaqueous electrolyte secondary battery electrode

Example 1-1

The coating properties of a mixture layer composition using graphite as the negative electrode active material and the acrylic crosslinked polymer R-1 as the binder were measured, as was the peeling strength between the formed mixture layer and a collector (that is, the binding properties of the binder).

100 parts of artificial graphite (product name "CGB-10" by Nippon Graphite Industries, Co., Ltd.) and 2.0 parts of the acrylic crosslinked polymer R-1 in powder form were thoroughly mixed in advance, after which 102 parts of ion-exchange water were added, and the mixture was pre-dispersed with a disperser and then dispersed for 15 seconds at a peripheral speed of 20 m/second with a thin film swirling mixer (Primix Corporation, FM-56-30) to obtain a negative electrode mixture layer composition in slurry form.

Using a variable applicator, this mixture layer composition was coated onto a 20 $\mu$m-thick copper foil (Nippon Foil Mfg. Co., Ltd.) so that the dried film thickness was 50 $\mu$m, and then immediately dried for 10 minutes at 100°C in a ventilating dryer to form a mixture layer. The external appearance of the resulting mixture layer was observed with the naked eye, and the coating properties were evaluated according to the following standard and judged as good "A".

(Coating property evaluation standard)

A: No streaks, spots or other appearance defects observed on surface
B: Slight streaks, spots or other appearance defects observed on surface
C: Obvious streaks, spots or other appearance defects observed on surface

(90° peel strength (binding property))

The mixture layer density was adjusted with a roll press to 1.7 $\pm$ 0.05 g/cm$^3$ to prepare an electrode, which was then cut into a 25 mm-wide strip to prepare a sample for peel testing. The mixture layer side of this sample was affixed to a horizontally fixed double-sided tape and peeled at 90° at a rate of 50 mm/minute, and the peel strength between the mixture layer and the copper foil was measured. The peel strength was as high as 10.8 N/m, exhibiting a favorable strength.

In general, when an electrode is cut, worked and assembled into a battery cell, the peel strength of at least 1.0 N/m is necessary to prevent the problem of detachment of the mixture layer from the collector (copper foil). The high peel strength in this case means that the binder provides excellent binding between the active materials and between the active material and the electrode, and suggests that it is possible to obtain a battery with excellent durability and little loss of capacity during charge-discharge cycle testing.

(Flex resistance)

This was evaluated using an electrode sample similar to that used in the 90° peel strength test. The electrode sample was wrapped around a SUS rod 2.0 mm in diameter, the condition of the bent mixture layer was observed, and flex resistance was evaluated based on the following standard, resulting in an evaluation of "B".

A: No appearance defects observed in mixture layer
B: Fine cracks observed in mixture layer
C: Obvious cracks observed in mixture layer, or mixture layer partially detached

Examples 1-2 to 1-13 and Comparative Examples 1-1 to 1-5

Mixture layer compositions were prepared by the same procedures as in Example 1-1 except that the crosslinked polymers used as binders were as shown in Tables 2 and 3, and the coating properties, 90° peeling strength and flex resistance were evaluated. The results are shown in Tables 2 and 3.

[Table 2]

| | | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 | Example 1-13 |
|---|---|---|---|---|---|---|---|---|---|---|---|---|---|---|---|
| Mixture layer composition (parts) | Active material CGB-10 | | 100 | 100 | 100 | 100 | 100 | 100 | 100 | 100 | 100 | 100 | 100 | 100 | 100 |
| | Acrylic crosslinked polymer | R-1 | 2.0 | | | | | | | | | | | | |
| | | R-2 | | 2.0 | | | | | | | | | | 1.0 | 3.0 |
| | | R-3 | | | 2.0 | | | | | | | | | | |
| | | R-4 | | | | 2.0 | | | | | | | | | |
| | | R-5 | | | | | 2.0 | | | | | | | | |
| | | R-6 | | | | | | 2.0 | | | | | | | |
| | | R-7 | | | | | | | 2.0 | | | | | | |
| | | R-8 | | | | | | | | 2.0 | | | | | |
| | | R-9 | | | | | | | | | 2.0 | | | | |
| | | R-10 | | | | | | | | | | 2.0 | | | |
| | | R-11 | | | | | | | | | | | 2.0 | | |
| | | R-12 | | | | | | | | | | | | | |
| | | R-13 | | | | | | | | | | | | | |
| | | R-14 | | | | | | | | | | | | | |
| | | R-15 | | | | | | | | | | | | | |
| | | R-16 | | | | | | | | | | | | | |
| | Ion-exchange water | | 102 | 102 | 102 | 102 | 102 | 102 | 102 | 102 | 102 | 102 | 102 | 83 | 126 |
| | Total | | 204 | 204 | 204 | 204 | 204 | 204 | 204 | 204 | 204 | 204 | 204 | 184 | 229 |
| | Solids concentration | (%) | 50.0% | 50.0% | 50.0% | 50.0% | 50.0% | 50.0% | 50.0% | 50.0% | 50,0% | 50.0% | 50.0% | 55.0% | 45.0% |
| Degree of neutralization of polymer powder | | (%) | 90.0% | 90.0% | 90.0% | 90.0% | 90.0% | 90.0% | 90.0% | 90.0% | 90.0% | 90.0% | 90.0% | 90.0% | 90.0% |
| Coating properties of slurry | | | A | A | A | A | A | B | B | A | A | A | B | A | A |

(continued)

| | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 | Example 1-13 |
|---|---|---|---|---|---|---|---|---|---|---|---|---|---|
| 90° peeling strength (N/m) | 10.8 | 8.1 | 5.1 | 2.5 | 6.8 | 11.1 | 5.8 | 4.2 | 9.5 | 12.1 | 1.8 | 1.2 | 14.2 |
| Flex resistance | B | A | A | A | A | A | B | A | B | B | B | A | a |

[Table 3]

| | | | Comparative Example 1-1 | Comparative Example 1-2 | Comparative Example 1-3 | Comparative Example 1-4 | Comparative Example 1-5 |
|---|---|---|---|---|---|---|---|
| Mixture layer composition (parts) | Active material CGB-10 | | 100 | 100 | 100 | 100 | 100 |
| | Acrylic crosslinked polymer | R-1 | | | | | |
| | | R-2 | | | | | |
| | | R-3 | | | | | |
| | | R-4 | | | | | |
| | | R-5 | | | | | |
| | | R-6 | | | | | |
| | | R-7 | | | | | |
| | | R-8 | | | | | |
| | | R-9 | | | | | |
| | | R-10 | | | | | |
| | | R-11 | | | | | |
| | | R-12 | 2.0 | | | | |
| | | R-13 | | 2.0 | | | |
| | | R-14 | | | 2.0 | | |
| | | R-15 | | | | 2.0 | |
| | | R-16 | | | | | 2.0 |
| | Ion-exchange water | | 102 | 102 | 102 | 102 | 102 |
| | Total | | 204 | 204 | 204 | 204 | 204 |
| | Solids concentration | (%) | 50.0% | 50.0% | 50.0% | 50.0% | 50.0% |
| Degree of neutralization of polymer powder | | (%) | 90.0% | 90.0% | 90.0% | 90.0% | 90.0% |
| Coating properties of slurry | | | C | C | C | B | B |
| 90° peeling strength (N/m) | | | 0.0 | 0.2 | 0.2 | 11.8 | 10.5 |
| Flex resistance | | | C | C | C | C | C |

EP 3 288 105 B1

Examples 1-1 to 1-13 pertain to electrode mixture layer compositions containing binders for nonaqueous electrolyte secondary battery electrodes according to the present teachings, and to electrodes prepared using these compositions. Each mixture layer composition (slurry) had good coating properties, and the peeling strength between the resulting electrode and a collector (copper foil) was at least 1.0 N/m, indicating excellent binding properties. The flex resistance of these electrodes was also confirmed to be at a satisfactory level.

Comparing the different crosslinking monomers used in the acrylic crosslinked polymer, Examples 1-1 to 1-10 using crosslinking monomers having one or more alkenyl groups in the molecule provided better coating properties and binding properties of the mixture layer composition and better flex resistance of the resulting electrode in comparison with Example 1-11. A particular good balance of the various properties at a high level was achieved in Example 1-2, which used a compound having multiple allyl ether groups in the molecule in combination with a compound having both (meth)acryloyl and alkenyl groups.

By contrast, in Comparative Example 1-1 using a non-crosslinked polymer the coating properties were poor because dispersion stability was insufficient, the binding properties of the binder were extremely low, and a good mixture layer was not obtained. In Comparative Example 1-2, which is an example using a polymer (R-13) in which the ratio of the monomer having acryloyl groups is less than 70% by weight of the monomer components, the coating properties of the mixture layer composition (slurry) were poor, and the binding properties were also inadequate.

The binding properties were greatly inferior in Comparative Example 1-3 using the acrylic crosslinked polymer (R-14), which contains a greater amount of a monomer corresponding to the component (b) of the present teachings. In Comparative Example 1-4 using the acrylic crosslinked polymer (R-15), which was obtained without using the component (b), the mixture layer was fragile and flex resistance was poor. Meanwhile, in Comparative Example 1-5, the SP value of the homopolymer of the monomer (AAm) copolymerized with the component (a) was outside the specified range of the present teachings (SP value: 19.2), and the resulting electrode had poor flex resistance.

Example 2-1

A lithium-ion secondary battery was prepared using a mixture layer composition containing hard carbon as a negative electrode material, acetylene black as a conductive aid and the crosslinked polymer R-1 as a binder, and the battery characteristics were evaluated.

100 parts of hard carbon (product name "LBV-1001" by Sumitomo Bakelite Co., Ltd.), 2 parts of acetylene black (product name "HS-100" by Denki Kagaku Kogyo K.K.) and 2 parts of the acrylic crosslinked polymer R-1 in powder form were thoroughly mixed in advance, after which 104 parts of ion-exchange water were added, and the mixture was pre-dispersed with a disperser and then dispersed for 15 seconds at a peripheral speed of 20 m/second with a thin film swirling mixer (Primix Corporation, FM-56-30) to obtain a negative electrode mixture layer composition in slurry form.

Using a direct coating-type coating device equipped with a drying furnace, this mixture layer composition was coated on both sides of a 20 $\mu$m-thick copper foil (Nippon Foil Mfg. Co., Ltd.) collector with a coating width of 120 mm, dried, and roll pressed to prepare a negative electrode comprising mixture layers on both sides of the collector. The adhering amount of the mixture layer was 4.96 mg/cm$^2$ (per side), and the density was 1.0 g/cm$^3$.

A 15 $\mu$m-thick aluminum foil collector (Nippon Foil Mfg. Co., Ltd.) having mixture layers constituted of a mixture layer composition containing NCM (Nippon Chemical Industrial Co., Ltd.) as an active material, HS-100 as a conductive aid and polyvinylidene fluoride (product name "KF #1000" by Kureha Corporation) in proportions of 85.5/4.5/10 (by weight) on both sides of the foil was used as the positive electrode. The adhering amount of the positive electrode mixture layer was 6.80 mg/cm$^2$ (per side), and the density was 2.78 g/cm$^3$.

Both the positive and negative electrodes were vacuum dried for 12 hours at 120°C, and slit to 96 × 84 mm in a case of the positive electrode and 100 × 88 mm in a case of the negative electrode. The slit electrodes (7 positive electrodes, 8 negative electrodes) were layered with polyethylene separators between the layers, to assemble a laminate cell. The laminate cell was sealed on three sides, vacuum dried for 5 hours at 60°C, injected with electrolyte solution (1 M, LiPF6 in EC/EMC = 3/7 (v/v)), and vacuum sealed. All laminate cell preparation was performed in a dry room.

The battery characteristics of the laminate cell prepared above were evaluated as follows.

(Initial charge/discharge test)

The initial charge-discharge capacity was measured under the following conditions using an SD8 charge/discharge system (Hokuto Denko Corporation).

During measurement, one charge/discharge cycle was performed first to stabilize the battery condition, after which a second charge/discharge cycle was performed, and it was confirmed that the charge/discharge capacity was stable within the design capacity (700 to 800 mAh).

Measurement temperature: 25°C

Charge: 0.1 C-CC/Cut-off 4.2 V => CV/end rate 0.01 C
Discharge: 0.1 C-CC/Cut-off 3.0 V

2 cycles

In the first cycle the charge capacity was 1,153 mAh and the discharge capacity was 776 mAh, while in the second cycle the charge capacity was 776 mAh and the discharge capacity was 760 mAh.

(Low-temperature rate test and AC impedance measurement)

A cell that had undergone initial charge/discharge testing was subjected to low-temperature rate testing followed by AC impedance measurement under the following conditions and order. An SD8 charge/discharge system (Hokuto Denko Corporation) and a VSP AC impedance measurement system (Bio-Logic Science Instruments) were used for measurement.

Measurement temperature: -15°C

(1) 0.1 C charge/discharge (low-temperature initial charge/discharge)

Charge: 0.1 C-CC/Cut-off 4.2 V
(pause time: 10 minutes)
Discharge: 0.1 C-CC/Cut-off 3.0 V

(2) AC impedance measurement

Charge: 0.1 C, 2 hours
Applied voltage: 10 mV
Frequency: 1,000 kHz to 10 mHz
(residual discharge treatment: 0.1 C to 3 V)

(3) 0.5 C charge/discharge

Charge: 0.5 C-CC/Cut-off 4.2 V
(pause time: 10 minutes)
Discharge: 0.5 C-CC/Cut off 3.0 V
(residual discharge treatment: 0.1 C to 3 V)

(4) 1 C charge/discharge

Charge: 1 C-CC/Cut-off 4.2 V
(pause time: 10 minutes)
Discharge: 1 C-CC/Cut-off 3.0 V
(residual discharge treatment: 0.1 C to 3 V)

(5) 2 C charge/discharge

Charge: 2 C-CC/Cut-off 4.2 V
(pause time: 10 minutes)
Discharge: 2 C-CC/Cut-off 3.0 V
(residual discharge treatment: 0.1 C to 3 V)

(6) 3 C charge/discharge

Charge: 3 C-CC/Cut-off 4.2 V
(pause time: 10 minutes)
Discharge: 3 C-CC/Cut-off 3.0 V
(residual discharge treatment: 0.1 C to 3 V)

(7) 4 C charge/discharge

Charge: 4 C-CC/Cut-off 4.2 V
(pause time: 10 minutes)
Discharge: 4 C-CC/Cut-off 3.0 V
(residual discharge treatment: 0.1 C to 3 V)

The measurement results of (1) above were low-temperature initial charge/discharge capacity 621 mAh, discharge capacity 604 mAh.

When a Nyquist plot was prepared from the measurement results of (2) above, the interface resistance value as estimated from the size of the arc was 0.35 $\Omega$.

The discharge capacities obtained from (3) to (7) above were divided by the discharge capacity obtained in (1) above to calculate the discharge capacity retention rate at each C-rate, which was 0.5 C: 71%, 1 C: 49%, 2 C: 23%, 3 C: 6%, 4 C: 0%. 0% here means that the Cut-off voltage (3.0 V) has reached immediately after the start of discharge due to a voltage drop caused by overvoltage.

(Cycle Test)

A cell that had undergone initial charge/discharge testing was subjected to cycle testing under the following conditions.

Measurement temperature: 25°C
Charge: 1 C-CC/Cut-off 4.2 V
Discharge: I C-CC/Cut-off 3.0 V

200 cycles

The discharge capacity of the 200th cycle was divided by the discharge capacity of the first cycle to calculate the 200-cycle discharge capacity retention rate, which was 95%.

Examples 2-2 to 2-6 and Comparative Examples 2-1 to 2-4

Laminate cells were assembled by the same operations as in Example 2-1 except that the crosslinked polymers used as binders were as shown in Table 4, and the battery characteristics were evaluated. The results are shown in Table 4.

In Comparative Example 2-4, the styrene-butadiene rubber (SBR) and carboxymethyl cellulose (CMC) show below were used as binders.

SBR: product name "TRD2001" by JSR Corporation, 1.5 parts as solids
CMC: product name "CMC2200" by Daicel FineChem Ltd., 1.5 parts as solids

[Table 4]

| | | | Example 2-1 | Example 2-2 | Example 2-3 | Example 2-4 | Example 2-5 | Example 2-6 | Comparative Example 2-1 | Comparative Example 2-2 | Comparative Example 2-3 | Comparative Example 2-4 |
|---|---|---|---|---|---|---|---|---|---|---|---|---|
| Negative electrode mixture layer composition | LBV-1001 (parts) | | 100 | 100 | 100 | 100 | 100 | 100 | 100 | 100 | 100 | 100 |
| | HS-100 (parts) | | 2 | 2 | 2 | 2 | 2 | 2 | 2 | 2 | 2 | 2 |
| | Crosslinked polymer | type | R-1 | R-2 | R-2 | R-2 | R-8 | R-9 | R-14 | R-15 | R-16 | SBR/CMC |
| | | (parts) | 2.0 | 1.0 | 2.0 | 4.0 | 2.0 | 2.0 | 2.0 | 2.0 | 2.0 | 3.0 |
| | Ion-exchange water (parts) | | 104 | 91 | 104 | 129 | 104 | 104 | 104 | 104 | 104 | 128 |
| | Total | | 208 | 194 | 208 | 235 | 208 | 208 | 208 | 208 | 208 | 233 |
| | Solids concentration (%) | | 50.0% | 53.1% | 50.0% | 45.1% | 50.0% | 50.0% | 50.0% | 50.0% | 50.0% | 45.1% |
| Degree of neutralization of crosslinked polymer (%) | | | 90.0% | 90.0% | 90.0% | 90.0% | 90.0% | 90.0% | 90.0% | 90.0% | 90.0% | - |
| First cycle charge capacity (mAh) | | | 1,153 | 1,175 | 1,150 | 1,135 | 1,155 | 1,158 | 1,150 | 1,156 | 1,160 | 1,165 |
| First cycle discharge capacity (mAh) | | | 776 | 789 | 774 | 761 | 776 | 775 | 755 | 777 | 772 | 769 |
| Second cycle charge capacity (mAh) | | | 776 | 796 | 782 | 759 | 785 | 788 | 762 | 775 | 778 | 784 |
| Second cycle discharge capacity (mAh) | | | 760 | 775 | 760 | 739 | 761 | 760 | 745 | 758 | 755 | 758 |
| Interface resistance value ($\Omega$) | | | 0.35 | 0.23 | 0.30 | 0.38 | 0.33 | 0.32 | 0.45 | 0.42 | 0.59 | 0.61 |
| Low-temperature initial charge capacity (mAh) (0.1 C) | | | 621 | 631 | 623 | 608 | 622 | 619 | 623 | 620 | 611 | 609 |
| Low-temperature initial discharge capacity (mAh) (0.1 C) | | | 604 | 623 | 606 | 601 | 604 | 601 | 606 | 602 | 598 | 599 |
| Low-temperature rate test Discharge capacity retention rate ((%) of 0.1 C) | 0.5 C | | 71% | 79% | 73% | 66% | 70% | 71% | 71% | 69% | 65% | 64% |
| | 1.0 C | | 49% | 59% | 52% | 48% | 49% | 48% | 45% | 44% | 38% | 39% |
| | 2.0 C | | 23% | 41% | 31% | 20% | 26% | 29% | 8% | 14% | 8% | 8% |
| | 3.0 C | | 6% | 20% | 15% | 5% | 8% | 12% | 0% | 2% | 0% | 0% |
| | 4.0 C | | 0% | 7% | 3% | 0% | 1% | 2% | 0% | 0% | 0% | 0% |

EP 3 288 105 B1

22

| | Example 2-1 | Example 2-2 | Example 2-3 | Example 2-4 | Example 2-5 | Example 2-6 | Comparative Example 2-1 | Comparative Example 2-2 | Comparative Example 2-3 | Comparative Example 2-4 |
|---|---|---|---|---|---|---|---|---|---|---|
| Cycle test (1 C, 200 cycles) discharge capacity retention rate (%) | 95% | 95% | 95% | 95% | 91% | 96% | 45% | 95% | 94% | 92% |

The compounds used in Table 4 are specified here.

LBV-1001: Hard carbon (Sumitomo Bakelite Co., Ltd.)
HS-100: Acetylene black (Denki Kagaku Kogyo K.K.)

In Examples 2-1 to 2-6 pertaining to the nonaqueous electrolyte secondary battery of the present teachings, the discharge capacity retention rate after cycle testing was high - 91% to 96% - indicating excellent cycle characteristics. All these examples also exhibited good high-rate characteristics. It is thought that this is because the interface resistance values are reduced due to the characteristics of the crosslinked polymers used, and the internal resistance of the battery is also reduced because the active material and conductive aid are uniformly dispersed and electron resistance is low. In comparison with Example 2-5 using the acrylic crosslinked polymer (R-8) having butyl acrylate as the component (b), Example 2-3 using the acrylic crosslinked polymer (R-2) having a monomer with ether groups as the component (b) had a greater discharge capacity retention rate at high current densities, and exhibited excellent high-rate characteristics.

By contrast, in Comparative Example 2-1 the cycle characteristics were poor, the discharge capacity retention rate was low in the low-temperature rate test, and the high-rate characteristics were also confirmed to be poor. It is thought that in this case the low ratio (25% by weight) of the ethylenically unsaturated carboxylic acid monomer in the constituent monomers of the polymer R-14 used as a binder caused poor binding with the collector (peeling strength) and excessive swelling by the electrolyte solution, as well as an insufficient desolvation effect of the carboxyl groups. In Comparative Examples 2-2 and 2-3, the interface resistance values were high and the discharge capacity retention rates were low in comparison with Examples 2-1, 2-2, 2-5 and 2-6, which used the same amount of the binder. In other words, the high-rate characteristics were confirmed to be inferior. It is thought that because the crosslinked polymers R-15 and R-16 used in Comparative Examples 2-2 and 2-3 did not have ethylenically unsaturated monomers lacking carboxyl groups and having SP values of 9.0 to 12.5 $(cal/cm^3)^{1/2}$ as constituent monomers, affinity for the electrolyte solution was lower than with the crosslinked polymers used in the examples, and more energy was required for the Li ions to enter and leave the active material. In Comparative Example 2-4 is using SBR and CMC as binders, the high-rate characteristics are shown to be inferior to those of the examples. In Comparative Example 2-4, it is thought that the interface resistance increased because the binder did not have sufficient carboxyl groups, and the high-rate characteristics declined as a result.

Industrial Applicability

The binder for a nonaqueous electrolyte secondary battery electrode of the present teachings has good binding properties, and has the effect of reducing battery resistance. As a consequence, a nonaqueous electrolyte secondary battery provided with an electrode obtained using this binder is expected to exhibit excellent high-rate characteristics and durability (cycle characteristics), and should be applicable to vehicle-mounted secondary batteries.

Because the binder of the present teachings has excellent flexibility, moreover, it can impart good flex resistance to an electrode mixture layer. Consequently, it can help to reduce trouble and increase yields during electrode manufacture.

**Claims**

1.   A binder for a nonaqueous electrolyte secondary battery electrode, containing an acrylic crosslinked polymer or salt thereof, wherein
in the acrylic crosslinked polymer, a component (a), which is an ethylenically unsaturated carboxylic acid monomer, constitutes 40% to 90% by weight, and a component (b), which is an ethylenically unsaturated monomer lacking carboxyl groups and having an SP value of 9.0 to 12.5 $(cal/cm^3)^{1/2}$ of the homopolymer, constitutes 10% to 60% by weight of the total constituent monomers, and
a ratio of monomers having acryloyl groups of the total constituent monomers is 70% by weight or more, wherein the SP value of the homopolymer is measured according to the description.

2.   The binder for a nonaqueous electrolyte secondary battery electrode according to claim 1, wherein the acrylic crosslinked polymer is crosslinked with a crosslinking monomer, and an amount of this crosslinking monomer used is 0.1 to 2.0 mol% of the total amount of non-crosslinking monomers.

3.   The binder for a nonaqueous electrolyte secondary battery electrode according to claim 1 or 2, wherein the crosslinking monomer is a compound having one or more alkenyl groups in the molecule.

**4.** The binder for a nonaqueous electrolyte secondary battery electrode according to claim 3, wherein the crosslinking monomers comprise a compound having multiple allyl ether groups in the molecule, and a compound having both (meth)acryloyl and alkenyl groups.

**5.** The binder for a nonaqueous electrolyte secondary battery electrode according to any one of claims 1 to 4, wherein the component (b) comprises a monomer having ether groups.

**6.** The binder for a nonaqueous electrolyte secondary battery electrode according to any one of claims 1 to 5, wherein the component (b) comprises a monomer having amide groups.

**7.** The binder for a nonaqueous electrolyte secondary battery electrode according to any one of claims 1 to 6, wherein a viscosity of an 0.5% by weight aqueous dispersion of the crosslinked polymer at a degree of neutralization of 90 mol% is 1,000 to 40,000 mPa·s.

**8.** A method of manufacturing an acrylic crosslinked polymer for use in a binder for a nonaqueous electrolyte secondary battery electrode by precipitation polymerizing, in an aqueous medium, monomer components of which a component (a), which is an ethylenically unsaturated carboxylic acid monomer, constitutes 40% to 90% by weight, and a component (b), which is an ethylenically unsaturated monomer lacking carboxyl groups and having an SP value of 9.0 to 12.5 $(cal/cm^3)^{1/2}$ of the homopolymer, constitutes 10% to 60% by weight, and wherein a ratio of monomers having acryloyl groups is 70% by weight or more, wherein the SP value of the homopolymer is measured according to the description.

**9.** An electrode mixture layer composition for a nonaqueous electrolyte secondary battery, containing a binder according to any one of claims 1 to 7, together with an active material and water.

**10.** A nonaqueous electrolyte secondary battery electrode including a mixture layer formed from the electrode mixture layer composition for a nonaqueous electrolyte secondary battery electrode according to claim 9 on the surface of a collector.

**11.** A nonaqueous electrolyte secondary battery provided with the nonaqueous electrolyte secondary battery electrode according to claim 10, together with a separator and a nonaqueous electrolyte solution.


**Patentansprüche**

**1.** Bindemittel für eine Sekundärbatterieelektrode mit einem nichtwässrigen Elektrolyten, das ein vernetztes Acrylpolymer oder ein Salz davon enthält, wobei
in dem vernetzten Acrylpolymer eine Komponente (a), die ein ethylenisch ungesättigtes Carboxylsäuremonomer ist, 40 bis 90 Gewichtsprozent ausmacht und eine Komponente (b), die ein ethylenisch ungesättigtes Monomer ohne Carboxylgruppen ist und einen SP-Wert von 9,0 bis 12,5 $(cal/cm^3)^{1/2}$ des Homopolymers hat, 10 bis 60 Gewichtsprozent der gesamten konstituierenden Monomere ausmacht, und
ein Anteil von Monomeren mit Acryloylgruppen 70 Gewichtsprozent oder mehr der gesamten konstituierenden Monomere ist, wobei der SP-Wert des Homopolymers gemäß der Beschreibung gemessen wird.

**2.** Bindemittel für eine Sekundärbatterieelektrode mit einem nichtwässrigen Elektrolyten nach Anspruch 1, wobei das vernetzte Acrylpolymer mit einem vernetzenden Monomer vernetzt ist und eine Menge dieses verwendeten vernetzten Monomers 0,1 bis 2,0 Molprozent der gesamten Menge der nicht-vernetzenden Monomere ist.

**3.** Bindemittel für eine Sekundärbatterieelektrode mit einem nichtwässrigen Elektrolyten nach Anspruch 1 oder 2, wobei das vernetzende Monomer eine Verbindung mit einer oder mehreren Alkenylgruppen im Molekül ist.

**4.** Bindemittel für eine Sekundärbatterieelektrode mit einem nichtwässrigen Elektrolyten nach Anspruch 3, wobei die vernetzenden Monomere eine Verbindung mit mehreren Allylethergruppen im Molekül und eine Verbindung mit sowohl (Meth)acryloylgruppen als auch Alkenylgruppen umfassen.

**5.** Bindemittel für eine Sekundärbatterieelektrode mit einem nichtwässrigen Elektrolyten nach einem der Ansprüche 1 bis 4, wobei die Komponente (b) ein Monomer mit Ethergruppen umfasst.

6. Bindemittel für eine Sekundärbatterieelektrode mit einem nichtwässrigen Elektrolyten nach einem der Ansprüche 1 bis 5, wobei die Komponente (b) ein Monomer mit Amidgruppen umfasst.

7. Bindemittel für eine Sekundärbatterieelektrode mit einem nichtwässrigen Elektrolyten nach einem der Ansprüche 1 bis 6, wobei eine Viskosität einer 0,5 gewichtsprozentigen wässrigen Dispersion des vernetzten Polymers bei einem Neutralisationsgrad von 90 Molprozent 1000 bis 40 000 mPa·s beträgt.

8. Verfahren zum Herstellen eines vernetzten Acrylpolymers zur Verwendung in einem Bindemittel für eine Sekundärbatterieelektrode mit einem nichtwässrigen Elektrolyten durch Fällungspolymerisation in einem wässrigen Medium von Monomerkomponenten, von denen eine Komponente (a), die ein ethylenisch ungesättigtes Carboxylsäuremonomer ist, 40 bis 90 Gewichtsprozent ausmacht und eine Komponente (b), die ein ethylenisch ungesättigtes Monomer ohne Carboxylgruppen mit einem SP-Wert von 9,0 bis 12,5 $(cal/cm^3)^{1/2}$ des Homopolymers ist, 10 bis 60 Gewichtsprozent ausmacht, und wobei ein Anteil von Monomeren mit Acryloylgruppen 70 Gewichtsprozent oder mehr beträgt, wobei der SP-Wert des Homopolymers gemäß der Beschreibung gemessen wird.

9. Zusammensetzung einer Elektrodenmischschicht für eine Sekundärbatterie mit einem nichtwässrigen Elektrolyten, die ein Bindemittel nach einem der Ansprüche 1 bis 7 zusammen mit einem aktiven Material und Wasser enthält.

10. Sekundärbatterieelektrode mit einem nichtwässrigen Elektrolyten mit einer Mischschicht, die aus der Zusammensetzung der Elektrodenmischschicht für eine Sekundärbatterieelektrode mit einem nichtwässrigen Elektrolyten nach Anspruch 9 auf der Oberfläche eines Kollektors gebildet ist.

11. Sekundärbatterie mit einem nichtwässrigen Elektrolyten, versehen mit der Sekundärbatterieelektrode mit einem nichtwässrigen Elektrolyten nach Anspruch 10, zusammen mit einem Separator und einer nichtwässrigen Elektrolytlösung.

## Revendications

1. Liant pour batterie secondaire à électrolyte non aqueux électrode, contenant un polymère réticulé acrylique ou sel de celui-ci, dans lequel
   dans le polymère réticulé acrylique, un composant (a), qui est un monomère d'acide carboxylique à insaturation éthylénique, constitut de 40 % à 90 % en poids, et un composant (b), qui est un monomère à insaturation éthylénique sans groupe carboxyle et ayant une valeur SP de 9,0 à 12,5 $(cal/cm^3)^{1/2}$ de l'homopolymère, constitut de 10 % à 60 % en poids des monomères constituants totaux, et
   un rapport de monomères ayant des groupes acryloyle des monomères constituants totaux est de 70 % en poids ou plus, dans lequel la valeur SP de l'homopolymère est mesurée selon la description.

2. Liant pour batterie secondaire à électrolyte non aqueux électrode selon la revendication 1, dans lequel le polymère réticulé acrylique est réticulé avec un monomère de réticulation, et une quantité de ce monomère de réticulation utilisé est de 0,1 à 2,0 % en mole de la quantité totale de monomères de non-réticulation.

3. Liant pour batterie secondaire à électrolyte non aqueux électrode selon la revendication 1 ou 2, dans lequel le monomère de réticulation est un composé ayant un ou plusieurs groupes alcényle dans la molécule.

4. Liant pour batterie secondaire à électrolyte non aqueux électrode selon la revendication 3, dans lequel les monomères de réticulation comprennent un composé ayant de multiples groupes éther allylique dans la molécule, et un composé ayant à la fois des groupes (méth)acryloyle et alcényle.

5. Liant pour batterie secondaire à électrolyte non aqueux électrode selon l'une quelconque des revendications 1 à 4, dans lequel le composant (b) comprend un monomère ayant des groupes éther.

6. Liant pour batterie secondaire à électrolyte non aqueux électrode selon l'une quelconque des revendications 1 à 5, dans lequel le composant (b) comprend un monomère ayant des groupes amide.

7. Liant pour batterie secondaire à électrolyte non aqueux électrode selon l'une quelconque des revendications 1 à 6, dans lequel une viscosité d'une dispersion aqueuse de 0,5 % en poids du polymère réticulé à un degré de neutralisation de 90 % en mole est de 1 000 à 40 000 mPa·s.

**8.** Procédé de fabrication d'un polymère réticulé acrylique, pour l'utilisation dans un liant pour une batterie secondaire à électrolyte non aqueux électrode, par polymérisation par précipitation, dans un milieu aqueux, de composants monomère dont un composant (a), qui est un monomère d'acide carboxylique à insaturation éthylénique, constitut de 40 % à 90 % en poids, et un composant (b), qui est un monomère à insaturation éthylénique sans groupe carboxyle et ayant une valeur SP de 9,0 à 12,5 $(cal/cm^3)^{1/2}$ de l'homopolymère, constitut de 10 % à 60 % en poids, et dans lequel un rapport de monomères ayant des groupes acryloyle est de 70 % en poids ou plus, dans lequel la valeur SP de l'homopolymère est mesurée selon la description.

**9.** Composition de couche de mélange d'électrode pour batterie secondaire à électrolyte non aqueux, contenant un liant selon l'une quelconque des revendications 1 à 7, conjointement avec un matériau actif et de l'eau.

**10.** Électrode de batterie secondaire à électrolyte non aqueux incluant une couche de mélange formée à partir de la composition de couche de mélange d'électrode pour batterie secondaire à électrolyte non aqueux électrode selon la revendication 9 sur la surface d'un collecteur.

**11.** Batterie secondaire à électrolyte non aqueux pourvue de l'électrode de batterie secondaire à électrolyte non aqueux selon la revendication 10, conjointement avec un séparateur et une solution électrolyte non aqueuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000294247 A
- JP 2014065407 A
- JP 2015018776 A

**Non-patent literature cited in the description**

- **R. F. FEDORS.** *Polymer Engineering and Science,* 1974, vol. 14 (2), 147